# EUROPEAN PATENT APPLICATION

(11) **EP 2 372 869 A2**
(43) Date of publication of application: **05.10.2011**
(21) Application number: 10197324.6
(22) Date of filing: 29.12.2010
(51) Int. Cl.: H02J 9/00

(54) **Power control apparatus and power control method**

(30) Priority: 31.03.2010 JP 2010084353
(71) Applicant: Kabushiki Kaisha Toshiba, Tokyo 105-8001 (JP)
(72) Inventor: Ohno, Katsuya, Tokyo 105-8001 (JP)
(74) Representative: Henkel, Breuer & Partner

(57) **Abstract**

According to one embodiment, a power control apparatus includes: a first power source (97) configured to perform a power supply so as to be on/off-switchable; a controller (110) configured to on/off-switch the power supply of the first power source; and a second power source (204) configured to be charged by the power supply of the first power source when the controller switches on the power supply of the first power source, and to perform a power supply using thus-charged electric energy when the controller switches off the power supply of the first power source, wherein the controller is configured to switch on the power supply of the first power source upon occurrence of a predetermined trigger, and to continue the power supply of the first power source if an elapsed time is shorter than a predetermined time, the elapsed time being a time from a time point when the power supply of the first power source is switched on to a time point when a request to switch off the power supply of the first power source is received.

## Description

### CROSS-REFERENCE TO RELATED APPLICATION(S)

This application is based upon and claims the benefit of priority from Japanese Patent Application No. 2010-084353, filed on March 31, 2010, the entire contents of which are incorporated herein by reference.

### FIELD

Embodiments described herein relate generally to a power control apparatus and a power control method for controlling the supply of power from a power source to reduce power consumption.

### BACKGROUND

Generally, an electronic apparatus is operable in an operative state where almost all of functional sections thereof are operative and in a standby state where only a part of functional sections are operative. For example, in the operative state, power is supplied to the operative functional sections. And, in the standby state, no power is supplied to the inoperative functional sections. In many cases, a relay is provided in a power supply path, and whether power is supplied or not is controlled by switching on or off the contact of the relay.

For example, JP-2004-274897-A (Fig. 1 and paragraph 0012) discloses to utilize a capacitor having been charged in an operative state as a power source in a standby state. In this method, in the standby state, a relay is turned off to shut off the power to a main operation section. And, when the voltage between the terminals of the capacitor becomes low in the standby state, the relay is turned on to charge the capacitor. Thus, the standby power is saved.

A relay may have a mechanical switching structure in which contact is mechanically opened/closed. Such mechanical relay can endure merely a limited number of times of switching operations. In view of such limitation, control methods are required to utilize such mechanical relay for switching between an operative state and a standby state of an apparatus.

JP-2009-015649-A (Fig. 5 and paragraph 0025) discloses a configuration in which a semiconductor relay is provided in addition to a mechanical relay in view of the life of the mechanical relay.

In JP-2004-274897-A, when the voltage between the terminals of the capacitor becomes low in the standby state, the relay is turned on to charge the capacitor. Therefore, when the power stored in the capacitor is frequently dissipated, the relay also frequently turns on/off, and the number of turning on/off the relay may easily reach the endurable number of times.

[0008] In JP-2009-015649-A, both of a mechanical relay and a semiconductor relay are provided in a power supply path for the inoperative functional sections in the standby state. However, since the semiconductor relay and a control circuit therefor should be supplied with a voltage to operate, this method is not preferable in view of power consumption.

That is, in related-art techniques, it is difficult to accomplish both of long life of relay and low power consumption.

### SUMMARY

According to an aspect of embodiment, there is provided a power control apparatus, including: a first power source configured to performs a power supply so as to be on/off-switchable; a controller configured to on/off-switch the power supply of the first power source; and a second power source configured to be charged by the power supply of the first power source when the controller switches on the power supply of the first power source, and to perform a power supply using thus-charged electric energy when the controller switches off the power supply of the first power source, wherein the controller is configured to switch on the power supply of the first power source upon occurrence of a predetermined trigger, and to continue the power supply of the first power source if an elapsed time is shorter than a predetermined time, the elapsed time being a time from a time point when the power supply of the first power source is switched on to a time point when a request to switch off the power supply of the first power source is received.

The apparatus may further includes: a monitoring module configured to operate with the power supply of the second power source, and to determine a remained electric energy of the second power source by monitoring a status of the power supply of the second power source, when the controller switches off the power supply of the first power source, wherein the controller may switch on the power supply of the first power source, when the monitoring modules determines that the remained electric energy of the second power source falls below a predetermined level as a monitoring result, as the predetermined trigger

The predetermined time may be a time elapsed from the time point when the power supply of the first power source is switched on to a time point when a remained electric energy of the second power source exceeds a second predetermined level, in a state where the controller switches on the power supply of the first power source upon occurrence of the predetermined trigger.

The controller may start measuring the elapsed time from the time point when the power supply of the first power source is switched on upon occurrence of the predetermined trigger, after an event that an elapsed time from a time point when the power supply of the first power source is switched off to a time point when the power supply of the first power source is switched on upon occurrence of the predetermined trigger is shorter than a second predetermined time has occurred a predetermined number of times.

The controller may start measuring the elapsed time from the time point when the power supply of the first power source is switched on upon occurrence of the predetermined trigger, after an event that an elapsed time from a time point when the power supply of the first power source is switched off to a time point when the power supply of the first power source is switched on upon occurrence of the predetermined trigger is shorter than a second predetermined time has occurred a predetermined number of times within a third predetermined time.

According to another aspect of embodiment, there is provided a power control method for a power control apparatus, the apparatus including: a first power source configured to performs a power supply so as to be on/off-switchable; and a second power source configured to be charged by the power supply of the first power source when the power supply of the first power source is switched on, and to perform a power supply using thus-charged electric energy when the power supply of the first power source is switched off, the method including: on/off-switching the power supply of the first power source; switching on the power supply of the first power source upon occurrence of a predetermined trigger; and continuing the power supply of the first power source if an elapsed time is shorter than a predetermined time, the elapsed time being a time from a time point when the power supply of the first power source is switched on to a time point when a request to switch off the power supply of the first power source is received.

According to the embodiments, it is possible to accomplish both of long life of relay and low power consumption.

### BRIEF DESCRIPTION OF THE DRAWINGS

A general architecture that implements the various feature of the present invention will now be described with reference to the drawings. The drawings and the associated descriptions are provided to illustrate embodiments of the present invention and not to limit the scope of the present invention.

Fig. 1 illustrates a block configuration of a TV receiver as a power control apparatus according to an embodiment.

Fig. 2 illustrates a system configuration of the blocks for performing power control processing according to the embodiment.

Fig. 3 illustrates a part of a processing flow of the power control process that is executed after turning-on of the supply of switchable power.

Fig. 4 illustrates a part of a processing flow of the power control process that is executed before turning-off of the supply of switchable power.

Fig. 5 illustrates a time chart in the processes of Figs. 3 and 4.

Fig. 6 illustrates a processing flow of the modified power control process which is executed after turning-on of the supply of switchable power.

### DETAILED DESCRIPTION

In general, according to one embodiment, a power control apparatus includes: a first power source configured to performs a power supply so as to be on/off-switchable; a controller configured to on/off-switch the power supply of the first power source; and a second power source configured to be charged by the power supply of the first power source when the controller switches on the power supply of the first power source, and to perform a power supply using thus-charged electric energy when the controller switches off the power supply of the first power source, wherein the controller is configured to switch on the power supply of the first power source upon occurrence of a predetermined trigger, and to continue the power supply of the first power source if an elapsed time is shorter than a predetermined time, the elapsed time being a time from a time point when the power supply of the first power source is switched on to a time point when a request to switch off the power supply of the first power source is received.

An embodiment will be hereinafter described with reference to the drawings.

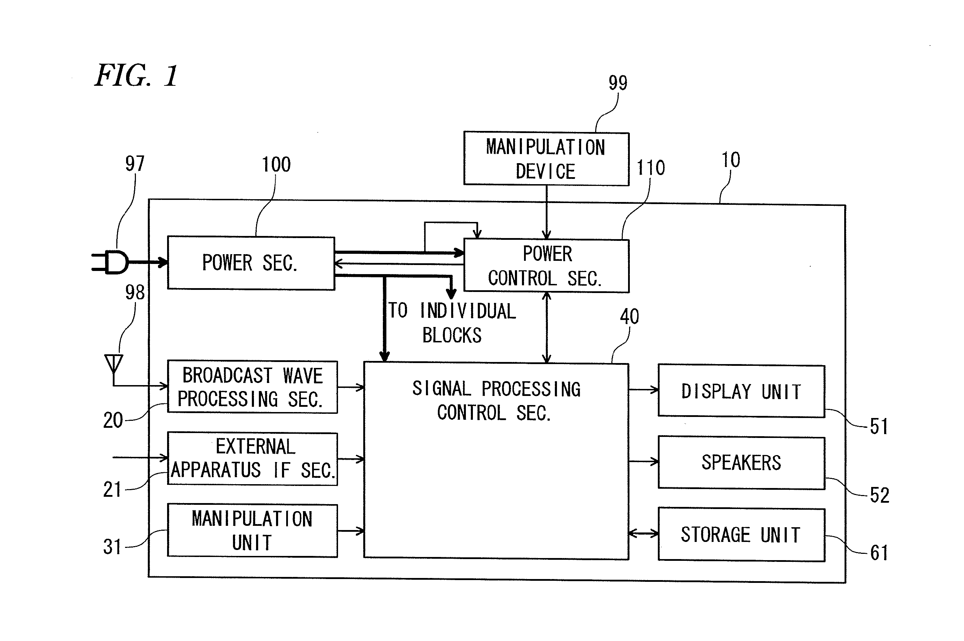

Fig. 1 illustrates the block configuration of a TV receiver 10 as a power control apparatus according to the embodiment. The TV receiver 10 has plural blocks therein, and performs a control of turning on/off the supply of power to the plural blocks.

The TV receiver 10 includes a broadcast wave processing section 20, an external apparatus IF section 21, a manipulation unit 31, a signal processing control section 40, a display unit 51, speakers 52, a storage unit 61, a power section 100, a power control section 110, etc. An antenna 98 is connected to the broadcast wave processing section 20. The power section 100 is connected to a plug 97 to be connected to a home socket, etc. The power control section 110 exchanges information with a manipulation device 99. The manipulation device 99 is a remote control device such as an infrared remote controller or a radio communication device, and has a power key (not shown) for on/off-switching the power of the TV receiver 10.

The TV receiver 10 receives external power that is supplied from a home socket or the like that is connected to the plug 97. The TV receiver 10 performs predetermined conversion processing on the external power to generate plural kinds of power for plural blocks provided therein. At least a part of the above-mentioned "plural kinds of power" can be switched on/off by, for example, a manipulation by the user. Among the plural kinds of power generated by the power section 100, the power whose supply can be switched on/off will be referred to as "switchable power", and power that is supplied to particular blocks while the TV receiver 10 is powered off will be referred to as "off-time power".

To on/off-switch the supply of switchable power, the power section 100 uses a openable/closable relay for opening or closing a power supply path. In general, such a relay can endure merely a limited number of times of opening/closure switching operations. That is, if the supply of switchable power is on/off-switched frequently, the number of switching operations of the relay reaches a predetermined endurable number of times in a short period. In the embodiment, the supply of switchable power is prevented from being switched frequently in a power-off state of the TV receiver 10.

The power section 100 produces plural kinds of power including "switchable power" and "off-time power" by performing predetermined conversion processing on external power that is supplied via the plug 97. The power section 100 performs power switching processing of switching on/off the supply of switchable power under the control of the power control section 110. Switchable power generated by the power section 100 is supplied to plural blocks including the signal processing control section 40. Off-time power generated by the power section 100 is supplied to the power control section 110.

The power control section 110 outputs, to the signal processing control section 40, manipulation information corresponding to a signal that is input from the manipulation device 99. The power control section 110 exchanges information relating to the power switching processing with the signal processing control section 40. The power control section 110 outputs, to the power section 100, control information for the power switching processing of the power section 100 according to a signal that is input from the manipulation device 99 and information received from the signal processing control section 40. The power control section 110 operates on the off-time power among the plural kinds of power generated by the power section 100. Furthermore, the power control section 110 monitors the status of the off-time power supplied from the power section 100.

As described above, the power section 100 receives external power and generates plural kinds of power including switchable power and off-time power. The power control section 110 which operates on the off-time power controls the on/off switching of the supply of switchable power by controlling the power section 100. Furthermore, the power control section 110 monitors the status of the off-time power on which the power control section 110 itself operates. That is, in the embodiment, the on/off switching of the supply of switchable power by the power section 100 is controlled according to the status of the off-time power being monitored by the power control section 110.

Almost all of the blocks which will be described below operate on the switchable power among the plural kinds of power generated by the power section 100.

The broadcast wave processing section 20 has tuners and demodulators for processing terrestrial/satellite digital/analog broadcast wave received by the antenna 98. The broadcast wave processing section 20 receives reception signals of the antenna 98 and performs processing of tuning into a reception signal on a particular channel among the reception signals, demodulation processing, etc. The broadcast wave processing section 20 outputs, to the signal processing control section 40, a transport stream signal (hereinafter referred to as a TS signal) that is obtained by the above pieces of processing and contains video/audio information and other information.

The external apparatus IF section 21 has information extracting sections for extracting information according to various standards such as the HDMI (trademark) standard, the USB standard, and the IEEE 1394 standard. The external apparatus IF section 21 outputs, to the signal processing control section 40, a TS signal that is extracted from information received from any of external apparatus and storage media such as an external HDD and a memory card that are connected via connection terminals that comply with the above standards. For example, video/audio information of a content is received from a connected external apparatus or a storage medium. The external apparatus IF section 21 may receive analog video/audio signals from a connected external apparatus. In this case, the external apparatus IF section 21 A/D-converts the received video/audio signals and outputs resulting digital video/audio signals to the signal processing control section 40.

The manipulation unit 31 has plural manipulation keys including a power key (not shown) for powering on/off the TV receiver 10, and outputs manipulation information corresponding to each manipulation key to the signal processing control section 40 upon a manipulation.

The signal processing control section 40 performs plural kinds of processing using blocks provided in itself or connected to it. For example, when receiving power-on or off manipulation information from the manipulation unit 31 or from the manipulation device 99 via the power control section 110, the signal processing control section 40 performs information storage and reading on the storage unit 61 in association with a power-on or off operation. Furthermore, the signal processing control section 40 performs predetermined processing on a TS signal that is input from a selected input source and outputs a resulting video signal and audio signal to the display unit 51 and the speakers 52, respectively.

In the embodiment, the signal processing control section 40 operates on switchable power that is supplied from the power section 100. When receiving, from the power control section 110, information for turning off the supply of switchable power, the signal processing control section 40 performs predetermined processing, such as processing of storing information into the storage unit 61 and processing of sending information to the power control section 110 so that turning-off of the supply of switchable power is permitted. When activated upon turning-on of the supply of switchable power, the signal processing control section 40 performs predetermined processing, such as processing of inquiring to the power control section 110 about a triggering condition of the activation.

The display unit 51 is a display module which includes a display panel for displaying a video signal that is input from the signal processing control section 40. The display unit 51 may be a flat panel display such as an LCD (liquid crystal display) or a PDP (plasma display panel).

The speakers 52 output an audio signal that is input from the signal processing control section 40. The speakers 52 may consist of two speakers (left-channel and right-channel speakers) and, if necessary, a subwoofer for outputting a low-frequency part of an input audio signal.

The storage unit 61 is a nonvolatile memory capable of continuing storage of information even in a state where no power is supplied. The storage unit 61 stores information. Information stored in the storage unit 61 can be read out by the signal processing control section 40. In the embodiment, the storage unit 61 stores, for example, information indicating a time when particular processing was performed. The storage unit 61 may be a drive device such as an HDD or a SSD. Where the storage unit 61 is a drive device, it may be provided outside the TV receiver 10.

The TV receiver 10 may further have a block (not shown) for implementing a network communication function that has a communication processing section for performing a communication over a network such as a LAN or a WAN. This block receives such information as video/audio information of a content from an information providing source such as a particular server or a recording medium located on the other side of a connected network, and outputs a TS signal that is based on the received information to the signal processing control section 40.

The TV receiver 10 may further have an ODD (optical disc drive; not shown) which reads information from and/or writes information to an optical disc. The ODD reads such information as video/audio information of a content from an optical disc and outputs a TS signal to the signal processing control section based on the read-out information 40.

While the TV receiver 10 is exemplified as a power control apparatus according to the embodiment, the invention may be applied to other apparatus such as a personal computer, a portable mobile terminal device, an HDD/optical disc recorder, and a set-top box. Furthermore, the invention may be applied to an electronic apparatus incorporating a power adaptor for supplying predetermined power to various electronic apparatus.

The above-configured plural blocks of the TV receiver 10 perform plural kinds of processing. In particular, the power section 100 on/off-switches the supply of switchable power to almost all of the blocks of the TV receiver 10 under the control of the power control section 110. Furthermore, the power control section 110 monitors the status of off-time power that is supplied from the power section 100. As such, the TV receiver 10 performs power control processing of on/off-controlling the supply of switchable power according to the status of off-time power. This makes it possible to prevent the switchable power from being switched frequently in a power-off state of the TV receiver 10. The control of plural kinds of power generated by the power section 100 are performed mainly by the power control section 110 and the signal processing control section 40 in a combination.

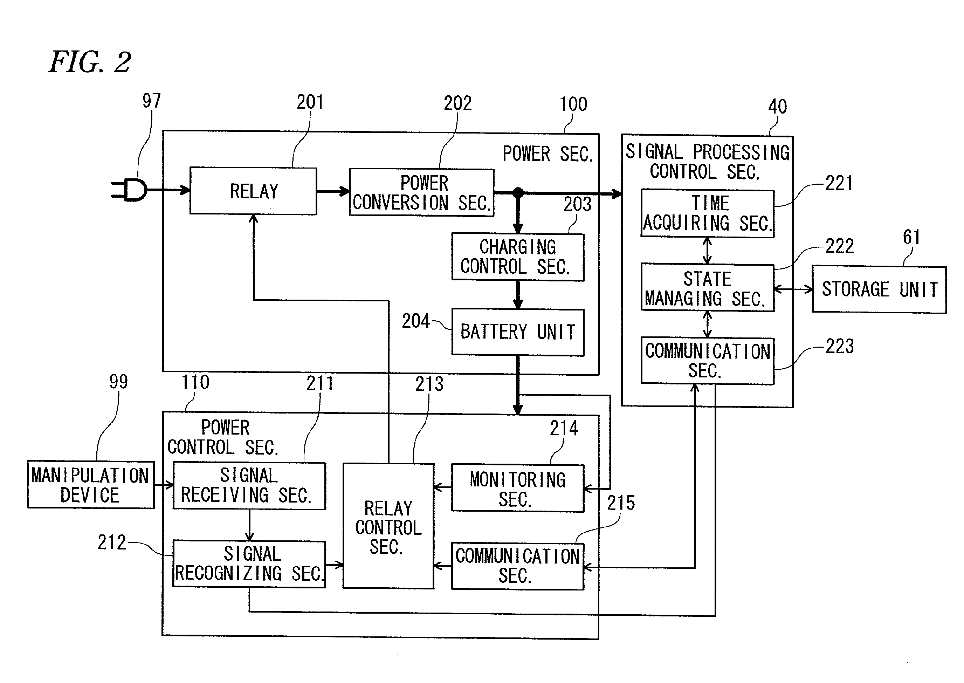

Next, individual blocks provided in the power section 100, the power control section 110 and the signal processing control section 40 to perform the power control processing according to the embodiment will be described with reference to Fig. 2.

Fig. 2 illustrates a system configuration of the blocks for performing the power control processing according to the embodiment.

As described above, in the power control processing according to the embodiment, the on/off switching of the supply of switchable power (generated by the power section 100) is controlled according to the status of off-time power. That is, the power control processing is performed according to a result of monitoring of the status of off-time power by the power control section 110.

The power section 100 has a relay 201, a power conversion section 202, a charging control section 203, and a battery unit 204. The power control section 110 has a signal receiving section 211, a signal recognizing section 212, a relay control section 213, a monitoring section 214, and a communication section 215. The signal processing control section 40 has a time acquiring section 221, a state managing section 222, and a communication section 223.

First, the individual blocks of the power section 100 will be described in detail.

The relay 201 is an opening/closing component having a contact for opening or closing the power supply path from the plug 97 to the power conversion section 202. The relay 201 opens or closes its contact according to a control signal that is input from the relay control section 213 of the power control section 110. It is preferable that the relay 201 be disposed close to the plug 97 rather than the power conversion section 202 in the power supply path. The relay 201 can endure a limited number of times of opening/closure switching operations. According to the power control processing according to the embodiment, opening/closure switching operations of the relay 201 are not performed frequently.

The power conversion section 202 generates power having a predetermined voltage by performing voltage conversion processing such as AC/DC conversion and DC/DC conversion on external power that is supplied while the contact of the relay 201 is closed. The generated power having the predetermined voltage is switchable power the supply of which is on/off-switched by opening/closing the contact of the relay 201. The power conversion section 202 supplies the generated switchable power to individual blocks of the TV receiver 10 including the charging control section 203 and the signal processing control section 40.

While the supply of switchable power is on, the charging control section 203 generates battery power by performing charging processing of charging the battery unit 204 based on the switchable power that is supplied from the power conversion section 202. The charging control section 203 suspends the charging processing while the supply of switchable power is off, because it is supplied with no charging power. Even while the supply of charging power is on, the charging control section 203 suspends the charging processing if the battery unit 204 is charged beyond a predetermined capacity.

The battery unit 204 is a chargeable battery that is charged based on switchable power by charging processing of the charging control section 203 while the supply of switchable power is on. Even while the supply of switchable power is on, the battery unit 204 is not charged and hence operates to supply the switchable power to the individual blocks of the power control section 110 if the battery unit 214 is charged beyond the predetermined capacity. While the supply of switchable power is off, the battery unit 204 serves as a power source for the individual blocks of the power control section 110, that is, supplies stored electric energy to the individual blocks of the power control section 110. The battery unit 204 may be an electric double-layer capacitor, for example.

As described above, the power section 100 has the battery unit 204. In a state where the supply of switchable power is off, the power that can be supplied to the individual blocks of the power control section 110 is limited due to the remained power amount of the battery unit 204. When the remained power amount of the battery unit 204 becomes unduly low, the supply of switching power should be increased to charge the battery unit 204.

Next, the individual blocks of the power control section 110 will be described in detail.

The signal receiving section 211 receives a signal containing information for manipulating the TV receiver 10 from the manipulation device 99, and outputs information obtained by performing predetermined processing on the received signal to the signal recognizing section 212. For example, where the manipulation device 99 is an infrared remote controller, the signal receiving section 211 performs photoelectric conversion on an infrared signal transmitted from the manipulation device 99 and outputs resulting information to the signal recognizing section 212. The signal receiving section 211 may send the manipulation device 99 a signal containing information indicating an operation status of the TV receiver 10 that is received by the communication section 215 from the communication section 223 of the signal processing control section 40.

The signal recognizing section 212 recognizes the information that is input from the signal receiving section 211 and, if necessary, refers to a status of control of the relay 201 by the relay control section 213. In the control status, whether the relay control section 213 is controlling the relay 201 to open/close. The signal recognizing section 212 outputs manipulation information corresponding to a recognition result and a reference result to the relay control section 213 or the signal processing control section 40. The manipulation information that is output to the relay control section 213 serves as switching information for opening or closing the relay 201.

The relay control section 213 outputs, to the relay 201, a control signal for on/off-switching the supply of switchable power based on switching information that is input from the signal recognizing section 212 or the communication section 215. Furthermore, in response to reference from the signal recognizing section 212, the relay control section 213 sends a response indicating a status of control on the relay 201. Still further, the relay control section 213 outputs, to the relay 201, a control signal for closing its contact (i.e., turning on the supply of switchable power) according to a result of monitoring of off-time power that is communicated from the monitoring section 214. The relay control section 213 manages, as control status information, a trigger of output control information and a control status. The trigger of control information is information indicating based on what information supplied from what block the control information was output. When requested to output control status information by the communication section 215, the relay control section 213 outputs control status information to the communication section 215.

The monitoring section 214 monitors the status of off-time power, and communicates information indicating a monitoring result to the relay control section 213. The monitoring section 214 monitors the actual on/off status at a predetermined cycle based on a clock signal having a predetermined frequency that is generated by a clock signal generating block (not shown). For example, the monitoring section 214 monitors the voltage of off-time power and detects an event that the monitoring subject voltage has become lower than or equal to a predetermined value. This is done by judging a digital value obtained by converting a voltage of off-time power via an electronic circuit using resistors, a diode or transistor, etc. The monitoring section 214 may start monitoring after a lapse of a predetermined time from a time point when the relay control section 213 output, to the relay 201, a control signal for turning off the supply of switchable power.

The communication section 215 exchanges information with the communication control section 223 of the signal processing control section 40. When receiving information indicating that turning-off of the supply of switchable power is permitted, the communication section 215 outputs switching information corresponding to this information to the relay control section 213. Furthermore, when requested to output information relating to control status information by the communication section 223, the communication section 215 requests the relay control section 213 to output control status information. Still further, the communication section 215 sends the communication section 223 control status information that is input from the relay control section 213.

Since the power control section 110 monitors the status of off-time power, the decrease in the remained power amount of the battery unit 204 can be recognized. In this case, the power control section 110 controls the power section 100 so that the supply of switchable power is turned on to charge the battery unit 204. For example, when the signal receiving section 211 is configured to receive signal-carrying light from an infrared remote controller (the manipulation device 99), due to the sunlight falls on the signal receiving section 211, unnecessary photoelectric conversion may be caused to increase the current consumption. In such a situation, the supply of switchable power may be switched on/off in short intervals to charge the battery unit 204, thereby frequently opening/closing the relay 201 to shorten the useful life thereof. According to the power control processing performed by the power control section 110 and the signal processing control section 40 (described below), such shortening of the useful life of the relay 201 can be avoided.

Next, the individual blocks of the signal processing control section 40 will be described in detail.

The time acquiring section 221 acquires information indicating a current time from a timekeeping block (not shown) at a predetermined cycle, and outputs the acquired information to the state managing section 222. The timekeeping block can be implemented by receiving a signal for a radio-controlled watch and keeps time based on the received signal. Alternatively, the timekeeping block may be such as to keep time based on information contained in PSI/SI information that is extracted from a TS signal that is input from the broadcast wave processing section 20. The time acquiring section 221 may output information indicating a current time to the state managing section 222 when requested to do so by the state managing section 222.

The state managing section 222 acquires, via the communication section 223, the control status information that is managed by the relay control section 213 of the power control section 110. The state managing section 222 outputs, via the communication section 223, information indicating that turning-off of switchable power is permitted. Furthermore, the state managing section 222 acquires information indicating a current time from the time acquiring section 221. Still further, the state managing section 222 reads, from the storage unit 61, a time when a particular event was processed, and stores, in the storage unit 61, a time when particular processing was performed. The state managing section 222 determines processing to be performed next based on pieces of information acquired from the communication section 223, the time acquiring section 221, and the storage unit 61. The state managing section 222 judges whether or not the current status is such that turning-off of the supply of switchable power should be avoided based on pieces of information acquired from the communication section 223, the time acquiring section 221, and the storage unit 61. When receiving, via the communication 223, information indicating that the supply of switchable power is about to be turned off, the state managing section 222 stores that information in the storage unit 61.

The communication section 223 exchanges information with the communication section 215 and the signal recognizing section 212 of the power control section 110. The communication section 223 receives, from the signal recognizing section 212, manipulation information, information indicating that the supply of switchable power is about to be turned off, and other information. The communication section 223 exchanges, with the communication section 215, the control status information that is managed by the relay control section 213, information indicating that turning-off of the supply of switchable power is permitted, and other information. The communication section 223 outputs, to the state managing section 222, particular ones of pieces of information received from the communication section 215 and the signal recognizing section 212. Furthermore, the communication section 223 requests the communication section 215 to output information whose transmission is requested by the state managing section 222.

With the above system configuration, the power control section 110 and the signal processing control section 40 perform the power control processing of controlling the on/off-switching of the supply of switchable power by the power section 100 according to the status of off-time power. In this processing, the signal processing control section 40 performs respective pieces of predetermined processing after turning-on of the supply of switchable power and before turning-off of the supply of switchable power based on the control status information managed by the power control section 110. Furthermore, the signal processing control section 40 judges whether or not the current status is such that turning-off of the supply of switchable power should be avoided. As such, the TV receiver 10 according to the embodiment enables power saving and makes it possible to elongate the useful life of the opening/closing component that is used for shutting off the supply of power.

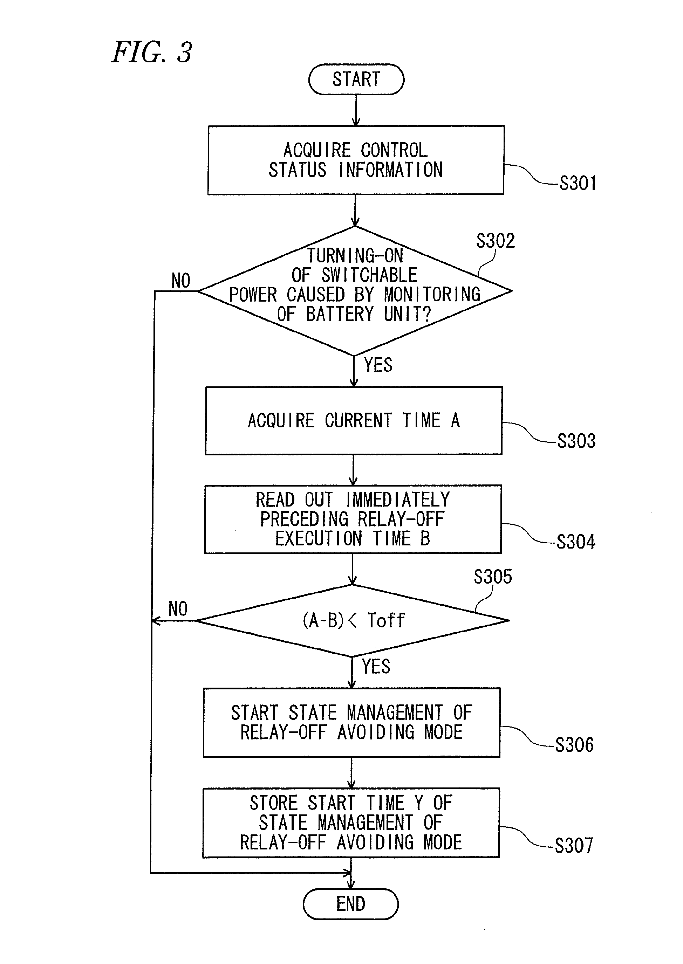

Next, part of the power control process that is executed by the blocks of the power section 100, the power control section 110, and the signal processing control section 40 (described above with reference to Fig. 2) after turning-on of the supply of switchable power will be described with reference to Fig. 3.

Fig. 3 illustrates a part of the processing flow of the power control process that is executed after turning-on of the supply of switchable power. This process is executed when the signal processing control section 40 is activated because of turning-on of the supply of switchable power.

First, at step S301, the state managing section 222 of the signal processing control section 40 acquires, via the communication section 223, control status information that is managed by the relay control section 213 of the power control section 110. At step S302, the state managing section 222 judges a trigger of output of control information based on the acquired control status information. Plural triggers are defined which include turning-on of switchable power in response to manipulation of the power key (not shown) of the manipulation unit 31, turning-on of switchable power in response to manipulation of the power key (not shown) of the manipulation device 99, and turning-on of switchable power according to a monitoring result of the monitoring section 214.

If the trigger judgment result is not "turning-on of switchable power according to a monitoring result of the monitoring section 214" (S302: no), the process is finished. On the other hand, the trigger judgment result is "turning-on of switchable power according to a monitoring result of the monitoring section 214" (S302: yes), at step S303 the state managing section 222 acquires information indicating a current time from the time acquiring section 221. The acquired current time is represented by A. At step S304, the state managing section 222 reads an immediately preceding relay-off execution time from the storage unit 61. For example, the relay-off execution time is a time when the state managing section 222 output, to the communication section 223, information indicating that turning-off of the supply of switchable power is permitted. The read-out immediately preceding relay-off execution time is represented by B. At step S305, the state managing section 222 calculates a relay-off time (A - B) which is the time difference between the acquired current time A and the read-out immediately preceding relay-off execution time B and compares it with a predetermined time Toff.

If the relay-off time (A - B) is not shorter than the predetermined time Toff (S305: no), the process is finished. On the other hand, if the relay-off time (A - B) is shorter than the predetermined time Toff (S305: yes), at step S306 the state managing section 222 starts state management of a relay-off avoiding mode. The relay-off avoiding mode is a mode in which turning-off of the supply of switchable power should be avoided. That is, in management of the relay-off avoiding mode, a state that turning-off of the supply of switchable power should be avoided (the supply of switchable power should be continued) is established. At a time point when the state management of the relay-off avoiding mode is started, at step S307 the state managing section 222 acquires information indicating a current time from the time acquiring section 221 and stores the acquired information in the storage unit 61. Then, the process is finished.

That is, if the trigger that caused turning-on of the supply of switchable power is "turning-on of switchable power according to a monitoring result of the monitoring section 214" and the relay-off time is shorter than the predetermined time, the state that turning-off of the supply of switchable power should be avoided is established. In a state that the charging time of the battery unit 204 is shorter than the predetermined time, it is judged that the current consumption of the power control section 110 is higher than in an ordinary state. Therefore, at this time point, it is judged that the charging of the battery unit 204 needs to be continued. In this manner, in the TV receiver 10 according to the embodiment, the electric energy stored in the battery unit 204 can be kept higher than a predetermined level.

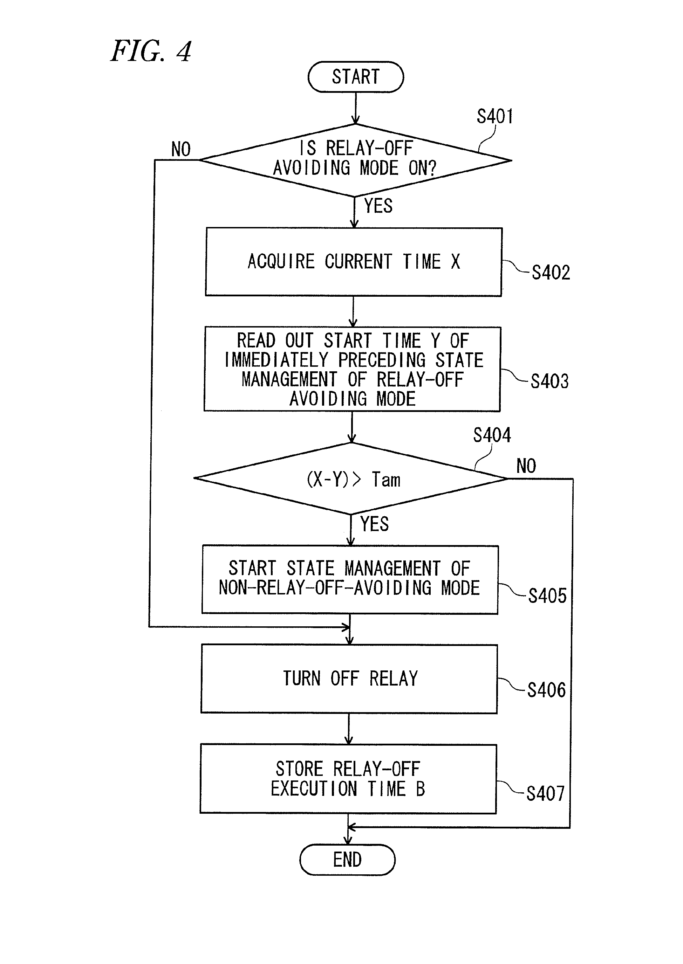

Next, part of the power control process that is executed by the blocks of the power section 100, the power control section 110, and the signal processing control section 40 (described above with reference to Fig. 2) before turning-off of the supply of switchable power will be described with reference to Fig. 4.

Fig. 4 illustrates a part of the processing flow of the power control process that is executed before turning-off of the supply of switchable power. This process is executed after the state managing section 222 receives information indicating that the supply of switchable power is about to be turned off from the power control section 110 via the communication section 223.

First, at step S401, the state managing section 222 judges whether or not the currently managed state is a state of the relay-off avoiding mode. If the currently managed state is not a state of the relay-off avoiding mode (S401: no), the state managing section 222 outputs, via the communication section 223, information to the effect that turning-off of the supply of switchable power is permitted. Receiving this information via the communication section 215, at step S406 the relay control section 213 outputs, to the relay 201, control information for turning off the relay 201 (i.e., shutting off the supply of switchable power).

On the other hand, if the currently managed state is a state of the relay-off avoiding mode (S401: yes), at step S402 the state managing section 222 acquires information indicating a current time from the time acquiring section 221. The acquired current time is represented by X. At step S403, the state managing section 222 reads, from the storage unit 61, a time when immediately preceding stage management of the relay-off avoiding mode was started. The read-out start time of the immediately preceding stage management of the relay-off avoiding mode is represented by Y. At step S404, the state managing section 222 calculates a relay-off avoiding mode on-time (X - Y) which is the time difference between the acquired current time X and the read-out start time of the immediately preceding stage management of the relay-off avoiding mode and compares it with a predetermined time Tam.

If the relay-off avoiding mode on-time (X - Y) is not longer than the predetermined time Tam (S404: no), the process is finished. On the other hand, the relay-off avoiding mode on-time (X - Y) is longer than the predetermined time Tam (S404: yes), at step S405 the state managing section 222 starts state management of a non-relay-off-avoiding mode. Furthermore, the state managing section 222 outputs, via the communication section 223, information to the effect that turning-off of the supply of switchable power is permitted. At step S406, the relay control section 213 outputs, to the relay 201, control information for turning off the relay 201 (i.e., turning off the supply of switchable power). At a time point of output, to the communication section 223, of the information to the effect that turning-off of the supply of switchable power is permitted, at step S407 the state managing section 222 acquires information indicating a current time from the time acquiring section 221 and stores the acquired information in the storage unit 61. Then, the process is finished.

That is, when requested to turn off the supply of switchable power, the signal processing control section 40 operates to continue the supply of switchable power if the power control state is being managed as a state that the supply of switchable power should be maintained (relay-off avoiding mode) and the relay-off avoiding mode on-time is longer than the predetermined time. When turning-off of the supply of switchable power is requested in a state that it is judged that charging of the battery unit 204 is necessary, a judgment is made that the charging is insufficient and the supply of switchable power is maintained if the charging time of the battery unit 204 is short. On the other hand, if the charging time of the battery unit 204 is long, a judgment is made that the charging is sufficient and a state that the supply of switchable power can be turned off is established.

With the above control, even if the current consumption of the power control section 110 is increased for a certain reason, an event that the contact of the relay 201 is opened and closed frequently can be avoided. Furthermore, the battery unit 204 can be given a sufficient charging time and the electric energy stored in the battery unit 204 can be kept higher than or equal to a predetermined level. As a result, in the TV receiver 10 according to the embodiment, power consumption can be saved and the useful life of the opening/closing component that is used for shutting off the supply of power can be elongated.

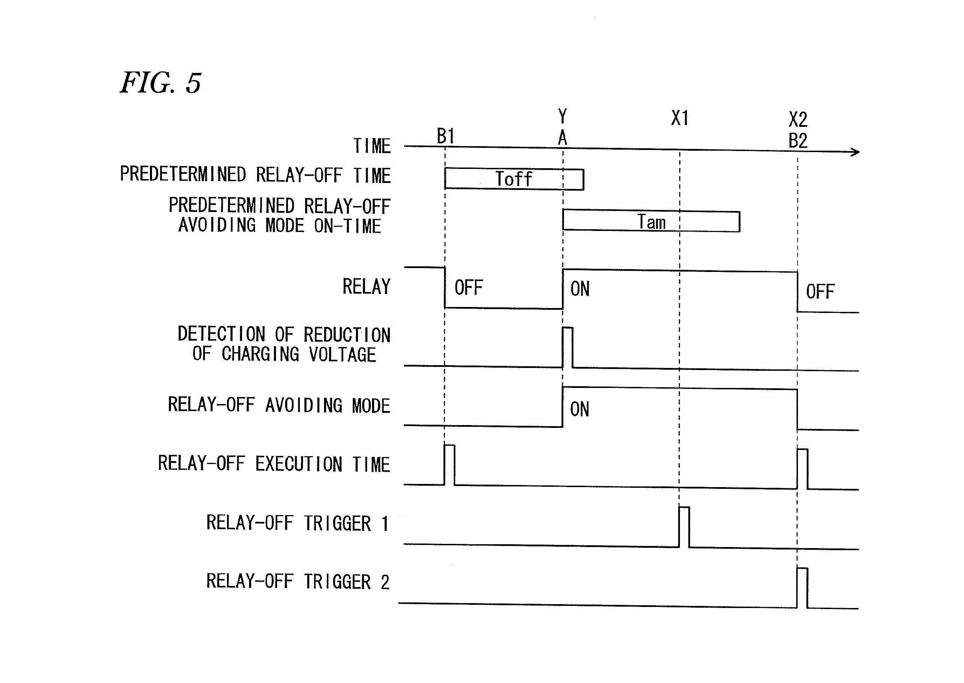

Next, specific manners of execution of the processes of Figs. 3 and 4 will be described with reference to Fig. 5. Fig. 5 illustrates a time chart in the processes of Figs. 3 and 4.

At time B1, the relay 201 is opened to turn off the supply of switchable power and a relay-off execution time B1 is registered.

At time A, it is detected that the voltage of off-time power has become lower than or equal to the predetermined value. As a result, the supply of switchable power is turned on (the relay 201 is closed) and a relay-off time (A - B1) is compared with the predetermined time Toff. Since the relay-off time (A - B1) is shorter than the predetermined time Toff, the relay-off avoiding mode is established. Time A is a start time Y of state management of the relay-off avoiding mode.

At time X1, turning-off of the supply of switchable power (opening of the relay 201) is requested. Since the relay-off avoiding mode is effective at this time point and a relay-off avoiding mode on-time (X1 - Y) is not longer than the predetermined time Tam, the supply of switchable power is maintained.

At time X2, turning-off of the supply of switchable power (opening of the relay 201) is requested again. The relay-off avoiding mode is effective at this time point, and a relay-off avoiding mode on-time (X2 - Y) is longer than the predetermined time Tam. Therefore, the relay-off avoiding mode is canceled and a control is made so as to turn off the supply of switchable power (i.e., open the relay 201). And a relay-off execution time B2 is registered.

As described above, even when turning-off of the supply of switchable power (opening of the relay 201) is requested, a no control for turning off the supply of switchable power is performed if the relay-off avoiding mode is effective and the relay-off avoiding mode on-time is not longer than the predetermined time Tam. Therefore, an event that the contact of the relay 201 is opened and closed frequently can be avoided. As a result, in the TV receiver 10 according to the embodiment, power consumption can be saved and the useful life of the opening/closing component that is used for shutting off the supply of power can be elongated.

(Modifications)

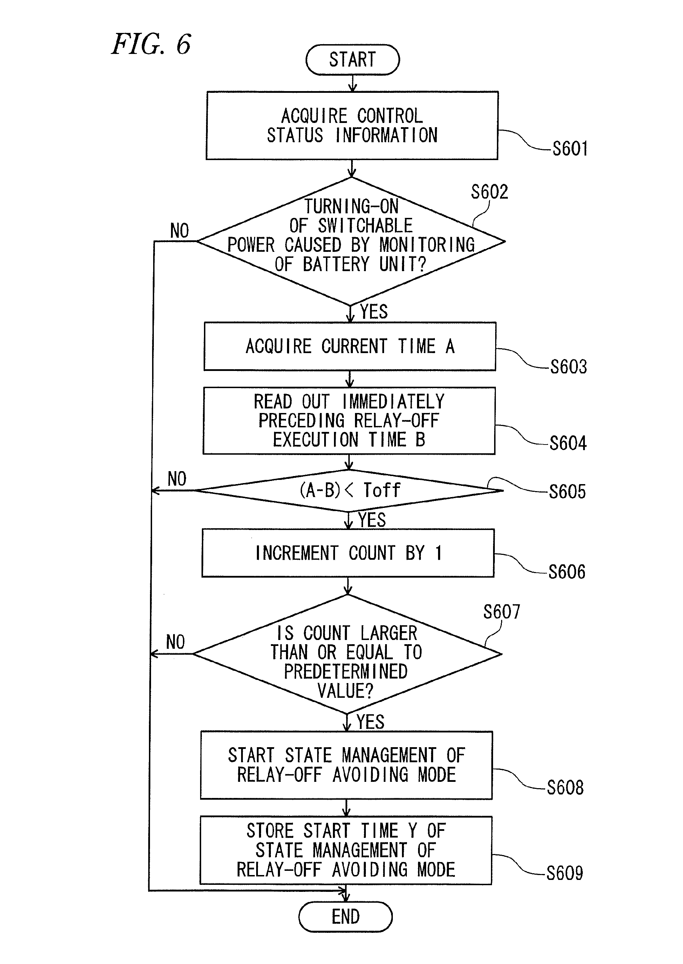

Next, a modification of that part (see Fig. 3) of the power control process of Fig. 3 which is executed after turning-on of the supply of switchable power will be described with reference to Fig. 6. Fig. 6 illustrates a processing flow of the modified power control process which is executed after turning-on of the supply of switchable power.

Like the process of Fig. 3, this process is executed when the signal processing control section 40 is activated because of turning-on of the supply of switchable power. This process is almost the same as the process of Fig. 3 and is different from the latter in that the number of times of occurrence of a comparison result that the relay-off time (A - B) is shorter than the predetermined time Toff is counted and branching is done depending on the count. Therefore, in the following description, only features that are different than in the process of Fig. 3 will be described in detail and the same or similar steps will be described in a simplified manner or will not be described at all.

At step S601, the state managing section 222 acquires control status information. At step S602, the state managing section 222 judges a trigger of output of control information based on the acquired control status information. If the trigger judgment result is not "turning-on of switchable power according to a monitoring result of the monitoring section 214" (S602: no), the process is finished. On the other hand, the trigger judgment result is "turning-on of switchable power according to a monitoring result of the monitoring section 214" (S602: yes), at step S603 the state managing section 222 acquires information indicating a current time. At step S604, the state managing section 222 reads an immediately preceding relay-off execution time from the storage unit 61. At step S605, the state managing section 222 calculates a relay-off time (A - B) and compares it with the predetermined time Toff.

If the relay-off time (A - B) is not shorter than the predetermined time Toff (S605: no), the process is finished. On the other hand, if the relay-off time (A - B) is shorter than the predetermined time Toff (S605: yes), at step S606 the state managing section 222 increment the count by 1. At step S607, the state managing section 222 judges whether or not the resulting count is larger than or equal to a predetermined value. If the count is smaller than the predetermined value (S607: no), the process is finished. On the other hand, if the count is larger than or equal to the predetermined value (S607: yes), at step S608 the state managing section 222 starts state management of the relay-off avoiding mode. At step S609 the state managing section 222 acquires a start time of the state management of the relay-off avoiding mode and stores the acquired information in the storage unit 61. Then, the process is finished.

With the above control, when a state that the charging time of the battery unit 204 is shorter than the predetermined time has been counted by the predetermined number of times, it is judged that the charging of the battery unit 204 needs to be continued. That is, if a state that the current consumption of the power control section 110 is increased for a certain reason is detected the predetermined number of times, an event that the contact of the relay 201 is opened and closed frequently can be avoided. This means that if a state that the current consumption of the power control section 110 is increased is continuing, it is judged that the charging of the battery unit 204 needs to be continued.

Another modification is possible in which whether or not the state that the relay-off time (A - B) is shorter than the predetermined time Toff has been detected a predetermined number of times in a predetermined time. In this modification, the count can be cleared if the state that the relay-off time (A - B) is shorter than the predetermined time Toff has not been detected the predetermined number of times in the predetermined time. This means that the continuation of the charging of the battery unit 204 is not judged very necessary if the state that the current consumption of the power control section 110 is increased occurs intermittently. In other words, this means that the state that the relay-off time (A - B) is shorter than the predetermined time Toff is detected the predetermined number of times in the predetermined time, it is judged that the charging of the battery unit 204 needs to be continued.

Therefore, also in the TV receivers 10 according to the above various modifications, the electric energy stored in the battery unit 204 can be kept higher than or equal to a predetermined level, power consumption can be saved, and the useful life of the opening/closing component that is used for shutting off the supply of power can be elongated.

As described above, in the TV receiver 10 according to the embodiment, when the supply of switchable power is turned on, a trigger of output of control information that has caused that switching and a relay-off time are judged. The TV receiver 10 manages a power control state according to results of those judgments. When requested to turn off the supply of switchable power, the TV receiver 10 judges a current power control status and a duration of a particular power control state and judges whether to turn off the supply of switchable power according to results of those judgments. Therefore, in the TV receiver 10 according to the embodiment, even if the current consumption of the power control section 110 is increased, an event that the contact of the relay 201 is opened and closed frequently can be avoided. Furthermore, the battery unit 204 can be given a sufficient charging time and the electric energy stored in the battery unit 204 can be kept higher than or equal to a predetermined level. As a result, in the TV receiver 10 according to the embodiment, power consumption can be saved and the useful life of the opening/closing component that is used for shutting off the supply of power can be elongated.

The invention is not limited to the above embodiment and various changes, modifications (other than the ones described above), etc. are possible without departing from the spirit and scope of the invention. For example, plural constituent elements disclosed in the embodiment may be appropriately combined, and a part thereof may be omitted.

## Claims

1. A power control apparatus, comprising:
a first power source configured to performs a power supply so as to be on/off-switchable;
a controller configured to on/off-switch the power supply of the first power source; and
a second power source configured
to be charged by the power supply of the first power source when the controller switches on the power supply of the first power source, and
to perform a power supply using thus-charged electric energy when the controller switches off the power supply of the first power source,
wherein the controller is configured
to switch on the power supply of the first power source upon occurrence of a predetermined trigger, and
to continue the power supply of the first power source if an elapsed time is shorter than a predetermined time, the elapsed time being a time from a time point when the power supply of the first power source is switched on to a time point when a request to switch off the power supply of the first power source is received.

2. The apparatus of Claim 1, further comprising:
a monitoring module configured to operate with the power supply of the second power source, and to determine a remained electric energy of the second power source by monitoring a status of the power supply of the second power source, when the controller switches off the power supply of the first power source,
wherein the controller switches on the power supply of the first power source, when the monitoring modules determines that the remained electric energy of the second power source falls below a predetermined level as a monitoring result, as the predetermined trigger

3. The apparatus of Claim 1,
wherein the predetermined time is a time elapsed from the time point when the power supply of the first power source is switched on to a time point when a remained electric energy of the second power source exceeds a second predetermined level, in a state where the controller switches on the power supply of the first power source upon occurrence of the predetermined trigger.

4. The apparatus of Claim 1,
wherein the controller starts measuring the elapsed time from the time point when the power supply of the first power source is switched on upon occurrence of the predetermined trigger, after an event that an elapsed time from a time point
when the power supply of the first power source is switched off to a time point when the power supply of the first power source is switched on upon occurrence of the predetermined trigger is shorter than a second predetermined time has occurred a predetermined number of times.

5. The apparatus of Claim 1,
wherein the controller starts measuring the elapsed time from the time point when the power supply of the first power source is switched on upon occurrence of the predetermined trigger, after an event that an elapsed time from a time point when the power supply of the first power source is switched off to a time point when the power supply of the first power source is switched on upon occurrence of the predetermined trigger is shorter than a second predetermined time has occurred a predetermined number of times within a third predetermined time.

6. A power control method for a power control apparatus, the apparatus comprising:
a first power source configured to performs a power supply so as to be on/off-switchable; and
a second power source configured to be charged by the power supply of the first power source when the power supply of the first power source is switched on, and to perform a power supply using thus-charged electric energy when the power supply of the first power source is switched off,
the method comprising:
on/off-switching the power supply of the first power source;
switching on the power supply of the first power source upon occurrence of a predetermined trigger; and
continuing the power supply of the first power source if an elapsed time is shorter than a predetermined time, the elapsed time being a time from a time point when the power supply of the first power source is switched on to a time point when a request to switch off the power supply of the first power source is received.
